# FASCICULE DE BREVET EUROPEEN

(11) **EP 1 770 837 B1**
(45) Date de publication et mention de la délivrance du brevet: **28.04.2010**
(21) Numéro de dépôt: 06291510.3
(22) Date de dépôt: 26.09.2006
(51) Int. Cl.: H01T 13/38, C04B 35/565

(54) **Procédé de préparation d'une bougie d'allumage, et bougie d'allumage ainsi obtenue**
Zündkerze und Verfahren zur ihrer Herstellung
Process for preparing a spark plug and obtained spark plug

(30) Priorité: 03.10.2005 FR 0510086
(43) Date de publication de la demande: 04.04.2007
(73) Titulaire: Vibro Meter France, 75011 Paris (FR)
(72) Inventeur: Jankowiak, Aurélien, 67540 Ostwald (FR); Collardey, Francois, 25150 Vermondans (FR); Blanchart, Philippe, 87100 Limoges (FR)
(74) Mandataire: Neyret, Daniel Jean Marie

(56) Documents cités:
- EP-A- 0 370 837
- US-A- 3 630 770
- PATENT ABSTRACTS OF JAPAN vol. 2003, no. 08, 6 août 2003 (2003-08-06) & JP 2003 095744 A (NIPPON TUNGSTEN CO LTD), 3 avril 2003 (2003-04-03)

## Description

L'invention concerne le domaine des bougies d'allumage, et plus particulièrement celui des céramiques utilisées dans la fabrication de bougies du type haute énergie basse tension.

On rappelle que les bougies d'allumage, notamment pour turbines à gaz et moteurs à réaction, peuvent relever de deux types :
- les bougies du type haute énergie haute tension (HEHT), dont la tension de fonctionnement est de l'ordre de 20 kV ;
- les bougies du type haute énergie basse tension (HEBT) dont la tension de fonctionnement est de l'ordre de 2 à 3 kV ; Elles sont capables de fournir une énergie de quelques 1/10 de Joule à quelques Joules.

Les bougies HEBT comportent un matériau, tel qu'un cermet, entre leurs électrodes, de manière à ce que l'application d'une tension suffisante entre ces électrodes conduise au passage d'une étincelle.

Le comportement du matériau pendant les différentes phases de l'étincelle a été analysé comme étant le suivant.

D'abord, le matériau est actif pendant la phase d'ionisation qui correspond à une accumulation de charges à la surface du matériau. Ensuite vient la phase d'amorçage qui, elle, correspond à une zone intermédiaire pendant laquelle il y a propagation de proche en proche de micro-arcs à ladite surface. Enfin, vient la phase d'étincelle pendant laquelle le matériau est inactif mais subit d'importantes contraintes mécaniques et thermiques engendrées par le passage de l'étincelle.

On notera que dans le langage courant des fabricants de bougies d'allumage, ce matériau est, parfois, qualifié de « semi-conducteur ». Cet usage ne correspond, cependant, pas vraiment à la réalité. En effet, lors de la phase d'amorçage, le matériau devient conducteur à sa surface, mais pas dans l'ensemble de son volume.

Les avantages des bougies HEBT sont, d'une part, liés à leur fonctionnement peu dépendant des conditions régnant dans la chambre de combustion (ré-allumage à forte pression), et, d'autre part, à la chaîne d'allumage de moindre importance qu'il suffit de mettre en place pour assurer leur fonctionnement. Ce sont ces avantages qui ont conduit au développement de matériaux céramiques à base de carbure de silicium décrits en particulier dans les documents US-A-5 028 346 et FR-A-2 346 881. Ces matériaux renferment également une phase isolante à base, par exemple, de nitrure de silicium et d'oxynitrure de silicium modifié, ou de silice, d'alumine et d'oxyde d'alcalino-terreux.

Cependant, si ces systèmes n'ont pas été généralisés sur les moteurs, c'est que la durée de vie d'une bougie de ce type devient très réduite dans le cas d'une utilisation dans des conditions sévères, c'est à dire à fortes pressions et hautes températures combinées avec des attaques chimiques liées au type de carburant utilisé.

Dans les bougies HEHT, c'est l'usure des électrodes qui limite la durée de vie des bougies, alors que dans les bougies HEBT, l'usure du matériau placé entre les électrodes intervient sensiblement avant l'usure des électrodes, et c'est elle qui limite la durée de vie.

Le but de l'invention est d'augmenter la durée de vie, et donc la fiabilité, des bougies du type HEBT.

A cet effet, l'invention a pour objet un procédé de préparation d'une bougie d'allumage à haute énergie basse tension, comportant une céramique entre ses électrodes, caractérisé en ce que :
- on mélange dans un récipient renfermant un liquide, 50 à 75% en masse d'un composé destiné à former une phase conductrice, et 25 à 50% en masse d'un ou plusieurs matériaux permettant la formation de phases de grenat d'yttrium après traitement thermique ;
- on effectue des opérations de broyage, de séchage et de tamisage de ce mélange ;
- on effectue un pressage ou une injection dans un moule de ce mélange ;
- on effectue un frittage de ce mélange de manière à obtenir une céramique de porosité comprise entre 0 et 30% ;
- et on utilise ladite céramique pour constituer le matériau situé entre les électrodes d'une bougie d'allumage à haute énergie basse tension.

La phase conductrice est, de préférence, choisie parmi le SiC et le MoSi₂ et leurs mélanges.

La porosité de la céramique obtenue est, de préférence, comprise entre 0 et 15%.

De préférence, on ajoute audit mélange un dopant thermoémissif à raison de jusqu'à 30% de la masse totale des composés destinés à former les phases conductrice et isolante.

De préférence, on ajoute au mélange 3 à 60% en masse, par rapport à la masse totale des composés destinés à former les phases conductrice et isolante, d'un ou plusieurs composés organiques liants et/ou plastifiants, et en ce qu'on effectue après le pressage ou l'injection et avant le frittage une opération de déliantage.

On peut effectuer le broyage en deux étapes, l'addition du plastifiant ayant lieu entre les deux étapes, et la deuxième étape de broyage étant moins énergique que la première étape.

Lesdits matériaux permettant la formation de phases de grenat d'yttrium peuvent être l'alumine et l'Y₂O₃.

Le grenat d'yttrium peut alors être un grenat d'yttrium-aluminium qui renferme un ou plusieurs des composés Y₂O₃, Al₂O₃, YAlO₃, Y₃Al₅O₁₂, Y₄Al₂O₉.

Le dopant thermoémissif peut être le LaB₆.

L'invention a également pour objet une bougie d'allumage du type à haute énergie basse tension comportant une céramique entre ses électrodes, caractérisée en ce que ladite céramique est du type précédent.

Comme on l'aura compris, l'invention consiste d'abord à utiliser des phases isolantes de type grenat d'yttrium issues, par exemple, de la réaction entre l'Al₂O₃ et l'Y₂O₃. Celles-ci ont de très hautes résistances mécanique et thermomécanique. En outre leur résistivité électrique est très élevée, ce qui les rend utilisables dans les domaines d'applications visés.

Ainsi, l'élément situé entre les électrodes peut résister aux importantes sollicitations qu'il subit pendant la phase d'ionisation (forte pression, haute température, présence d'agents chimiques) et aussi pendant la phase d'étincelle où il est passif mais subit des chocs thermiques et mécaniques. Ceux-ci conduisent à un déchaussement des particules de phase conductrice situées au voisinage de la surface inter-électrodes dans le cas des bougies HEBT utilisant ce matériau connues dans l'art antérieur.

D'autre part, l'invention permet de diminuer considérablement le taux de ratés des bougies, qui devient durablement inférieur à 1 %.

L'invention sera mieux comprise à la lecture de la description qui suit, donnée en référence aux figures annexées suivantes :
- la figure 1 qui montre le diagramme de phases Y₂O₃-Al₂O₃
- la figure 2 qui montre l'usure moyenne en mm au cours du temps (exprimé en nombre d'heures équivalent de fonctionnement en continu sur moteur) d'une céramique de référence et d'une céramique de l'invention lorsqu'elles sont utilisées dans une bougie HEBT ;
- la figure 3 qui montre la variation au cours du temps de la tension de claquage, exprimée en V, de ces mêmes bougies
- la figure 4 qui montre la variation du pourcentage de ratés de ces mêmes bougies.

Comme exemples privilégiés de phases conductrices utilisables dans le cadre de l'invention, on peut citer SiC et MoSi₂, qui montrent d'excellentes propriétés thermomécaniques. SiC présente une excellente résistance à l'oxydation, notamment aux températures de l'ordre de 650°C.

On peut remarquer que le MoSi₂ tend à s'oxyder fortement entre 300°C et 700°C pour former de la silice et du MoO₃ dont le volume de maille est très supérieur à celui du MoSi₂, ce qui conduit à la longue à une fissuration des pièces. Mais aux températures très élevées (1100°C et davantage), ce phénomène ne se produit pas, car il se forme une couche de silice protectrice qui évite la formation brutale de MoO₃. Le MoSi₂ est donc bien adapté aux utilisations impliquant de très hautes températures, pour lesquelles des dopants thermoémissifs ne sont pas utiles.

Concernant la phase isolante qui est un grenat d'yttrium tel que du YAG (grenat d'yttrium-aluminium) ou un mélange de divers grenats d'yttrium, elle est obtenue lors du frittage, à partir, par exemple, d'Al₂O₃ et de Y₂O₃. On ajoute également de préférence un additif dit un « dopant thermoémissif » tel que du LaB₆.

Les composés qui ont été cités permettent la formation de phases assurant une densification optimale et procurant à la céramique une grande dureté et de bonnes propriétés mécaniques et thermomécaniques. La porosité de la céramique obtenue ne doit pas dépasser 30%, de préférence 15%, afin d'assurer une bonne résistance mécanique à la pièce et limiter les risques de perforation de cette dernière par l'arc électrique.

Les proportions respectives des différents composés essentiels sont, en pourcentages en masse rapportés au total des matières solides destinées à subsister dans la céramique finale :
- 50 à 75% pour les matériaux constituant la phase conductrice ;
- 25 à 50% pour les matériaux constituant la phase isolante ;

De préférence on ajoute des additifs assurant un meilleur fonctionnement électrique du composant, tel que décrit notamment dans le brevet EP-B-0 370 837. Ils sont dits « dopants thermoémissifs ». On peut les ajouter à raison de jusqu'à 30% de la masse totale des composés constituant la phase conductrice et des matériaux constituant la phase isolante.

Les additifs thermoémissifs sont de préférence choisis parmi le borure de lanthane LaB₆, le titane, le titanate de baryum et le tungstène. Le borure de lanthane est un exemple privilégié.

Des composés permettant de faciliter l'obtention d'une céramique ayant la morphologie désirée, mais non destinés à subsister en tant que tels dans le produit final, peuvent être utilisés lors de la préparation. Notamment on peut utiliser des dispersants, des liants et des plastifiants. Les dispersants peuvent être présents à raison de jusqu'à 1% en masse par rapport aux deux composés constituant les phases conductrice et isolante, et les plastifiants et liants à raison, par exemple, de 3 à 60% en masse par rapport aux composés constituant les phases conductrice et isolante. Les liants et plastifiants ne doivent pas contenir d'alcalins ou d'alcalino-terreux, et doivent être purement organiques afin de ne pas polluer la composition de base.

Comme exemple non limitatif de procédé de préparation de céramiques selon l'invention, on peut citer le mode opératoire suivant.

Au cours d'une première étape, on mélange des composés mis sous forme de poudres, de préférence en deux sous-étapes.

Dans la première sous-étape, on verse dans une jarre 28g de Al₂O₃, 5g de Y₂O₃ et 10g de LaB₆. La jarre contient 10 médias de broyage d'un diamètre de 13mm environ. On ajoute dans la jarre 13g d'eau osmosée, 0.3g de DARVAN C ou de A88(5r,6r-2,4-bis-(4-hydroxy-3-methoxybenzyl)-1,5-dibenzyl-oxo-6-hydroxy-1,2,4-triazalycloheptane) ou de DOLAPIX PC33. Ces composés sont des dispersants. On pourrait utiliser d'autres milieux liquides que l'eau, par exemple de l'alcool, mais dans ce dernier cas il faudrait utiliser d'autres dispersants (par exemple du BEYCOSTAT C213 qui est un ester phosphorique), ceux cités précédemment n'étant pas compatibles avec l'alcool.

On effectue ensuite un broyage du mélange à relativement grande vitesse, en plaçant la jarre dans un planétaire pendant 45 minutes. Le but est de casser les éventuels agglomérats de poudre et de bien disperser la matrice. L'utilisation d'un broyeur à boulet serait possible, mais un mélange homogène serait plus long à obtenir (4 heures environ).

Dans une deuxième sous-étape, on ajoute dans la jarre 57g de carbure de silicium SiC de granulométrie moyenne 10µm et une solution contenant 35g d'eau osmosée, 5g de PEG600 et 1 g d'ESACOL HS26. Le PEG 600 est un polyéthylène glycol. Ce composé est un plastifiant qui facilite l'étape de pressage ultérieure. L'ESACOL HS26 est un liant à base de gomme de guar. La jarre est ensuite replacée dans le planétaire et on effectue un broyage à vitesse modérée pendant 20 minutes pour ne pas détériorer les plastifiants. Un broyage trop énergique briserait les chaînes polymères qui confèrent aux produits leurs propriétés élastiques. C'est également pour cette raison que les plastifiants ne sont introduits dans le mélange qu'après la première étape de broyage puisque celle-ci est énergique.

Le mélange obtenu est ensuite séché dans une étuve à 70°C pendant 24 heures pour éliminer l'eau du mélange.

La galette obtenue est broyée à l'aide d'un mortier. La poudre obtenue est tamisée avec un tamis de 500µm.

La poudre qui a traversé le tamis subit une opération de pressage en deux étapes : un pressage uniaxial dans un moule de 13mm de diamètre pour obtenir une préforme, puis un pressage isostatique dans une enceinte à 2000 bars.

Puis les préformes sont déliantées sous argon pur à une température maximale de 600°C pendant 3 jours, afin de brûler les additifs organiques présents dans les préformes.

Enfin, les préformes déliantées sont placées dans un creuset en graphite, pour y être frittées entre 1700 et 1950°C pendant une durée allant de 30 minutes à 2 heures sous atmosphère contrôlée, de préférence sous argon.

Le cycle de déliantage utilisé est le suivant :
- Montée à 0,2°C/min jusqu'à 600°C
- Palier de 5 heures à 600°C
- Descente à 10°C/min

Le cycle de frittage utilisé dans cet exemple est le suivant :
- Montée à 10°C/min jusqu'à 1800°C
- Palier de 60min à 1800°C
- Descente à 10°C/min jusqu'à 20°C

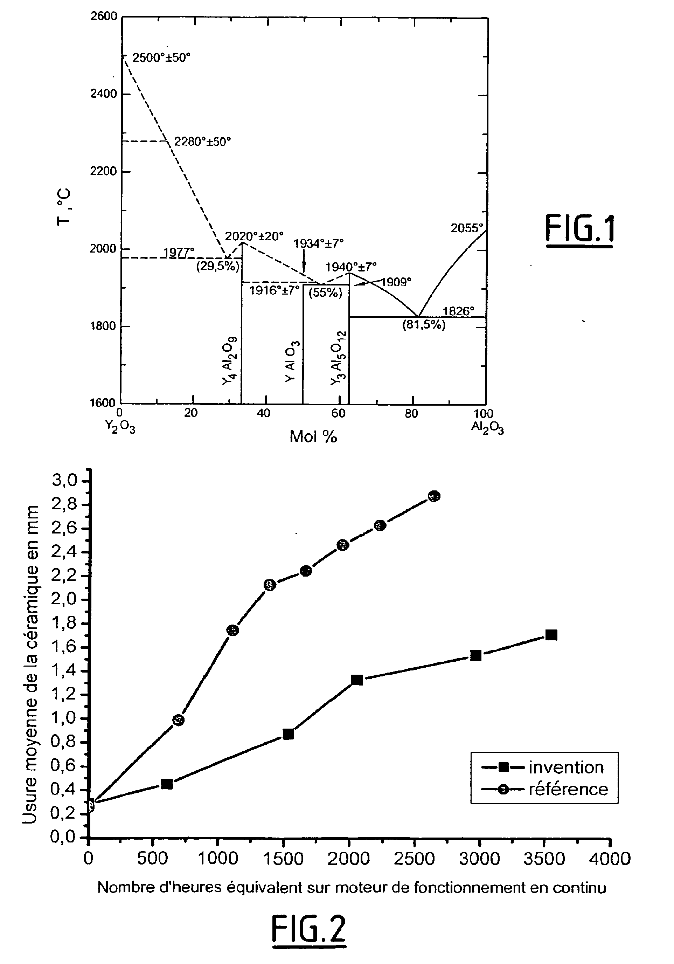

On obtient selon l'invention une céramique contenant du SiC, du LaB₆ et un ou plusieurs des composés suivants : Y₂O₃, Al₂O₃ et YAlO₃, Y₃Al₅O₁₂, Y₄Al₂O₉, ou autres, appartenant au diagramme Y₂O₃-Al₂O₃ représenté à la figure 1, et de porosité totale (ouverte et fermée) égale à 25% au maximum. On note également la présence de divers composés contenant les éléments suivants : La, B, Al, O, Y

Dans l'exemple précis qui vient d'être décrit, la céramique obtenue a la composition et la morphologie suivantes : SiC = 57% ; LaB₆ = 10% ; total Al₂O₃, Y₂O₃, YAlO₃, Y₃Al₅O₁₂, Y₄Al₂O₉ = 28% ; porosité = 30%.

Il doit être entendu que les détails des modes opératoires pour l'obtention des céramiques selon l'invention peuvent s'écarter des exemples qui ont été décrits. L'essentiel est qu'au final, on obtienne une céramique ayant la composition et les porosités requises. En particulier, il est envisageable de se passer du pressage uniaxial et de n'effectuer qu'un pressage isostatique de la poudre. Mais l'utilisation des deux étapes procure une meilleure homogénéité des pièces en termes de densité, et permet de n'utiliser qu'une faible quantité de liants et de plastifiants (on peut descendre jusqu'à 3% en masse par rapport aux composés formant les phases isolante et conductrice). Si on n'utilise qu'un pressage isostatique, il est conseillé d'utiliser des liants et des plastifiants à des teneurs avoisinant 10%. De même, au lieu d'introduire plusieurs composés qui vont former un ou des grenats d'yttrium au cours du frittage, on peut introduire directement un tel grenat d'yttrium qui sera fritté sans être chimiquement modifié.

Puis la céramique est usinée, et incorporée à une bougie HEBT pour en constituer l'élément intercalé entre ses électrodes (et souvent qualifié, abusivement, de «semi-conducteur», comme on l'a exposé dans la partie introductive). Sur les autres aspects que le choix de la céramique, cette bougie HEBT ne présente pas de particularités.

Une variante de ce procédé consiste à effectuer la mise en forme de la céramique non plus par un pressage dans un moule suivi, après déliantage et frittage, par un usinage, mais par un moulage par injection effectué dans un moule indéformable qui confère directement sa forme finale à la céramique. On exécute ensuite le déliantage et le frittage, puis une éventuelle finition de la céramique s'il faut lui conférer un état de surface particulier. Dans ce cas, il est préférable, pour que le moulage par injection s'effectue correctement, d'utiliser une proportion élevée de liants et plastifiants, pouvant atteindre jusqu'à 60% de la masse des composés constituant les phases isolante et conductrice.

Les figures 2, 3 et 4 présentent des résultats expérimentaux obtenus lors d'essais d'endurance sous pression et en température.

On utilise deux bougies d'allumage. La première est montée avec, entre ses électrodes, une céramique de référence représentative de l'art antérieur selon le document US-A-5 028 346, et renfermant du carbure de silicium, du nitrure de silicium et un oxynitrure de silicium modifié. Elle contient 54 à 65% de SiC, 29 à 40% de nitrure de silicium et 8 à 22% d'oxynitrure de silicium modifié. La seconde est montée avec une céramique conforme à l'invention, et préparée selon le procédé décrit dans l'exemple détaillé précité.

Le circuit d'allumage inclut un condensateur de 0,33µF, la pression dans l'enceinte est de 14 bars et la température est fixée à 500°C. La fréquence des impulsions est de 6Hz. La tension de claquage des deux bougies est trouvée égale à 900V.

La figure 2 montre la profondeur d'usure moyenne de la céramique par rapport à l'électrode périphérique, (exprimée en mm), en fonction du temps exprimé en nombre d'heures équivalent sur moteur. L'usure mesurée de la céramique de l'art antérieur est nettement supérieure (de l'ordre de 2 fois) à celle mesurée sur la céramique suivant l'invention.

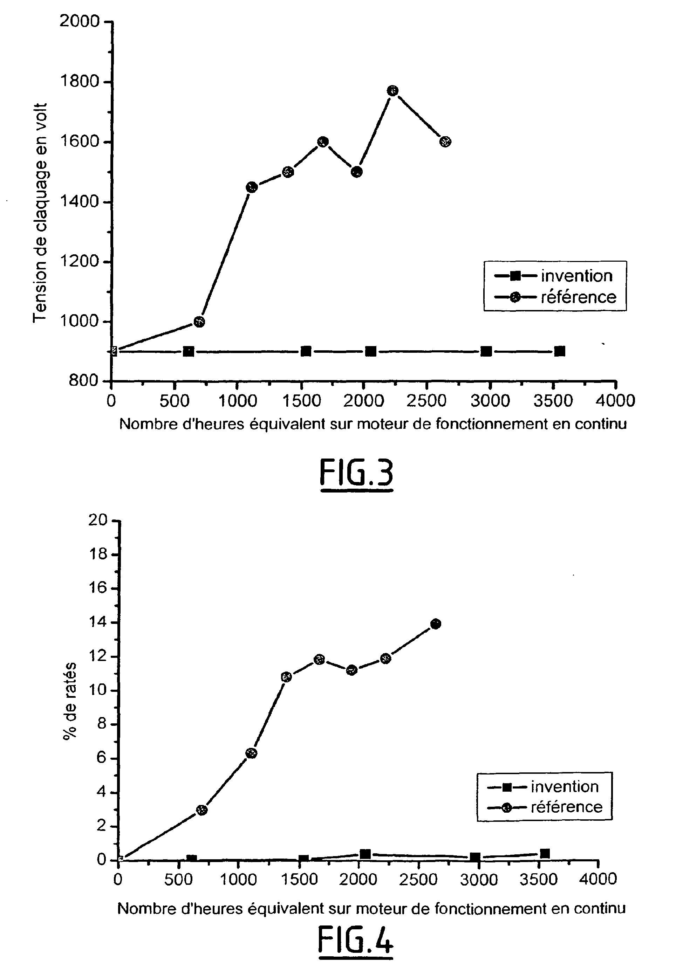

De plus, comme le montre la figure 3, la tension de claquage mesurée en fin de test (environ 2500 h équivalent moteur) augmente jusqu'à 1400V pour la céramique de l'art antérieur alors qu'elle reste de 900V pour la céramique suivant l'invention qui présente une stabilité remarquable de ce point de vue.

La figure 4 montre l'évolution du pourcentage de ratés d'étincelles en fonction du temps exprimé en équivalent heures moteur. Ce pourcentage de ratés est demeuré nettement inférieur à 1% pendant toute la durée du test, alors qu'il a rapidement atteint plusieurs % dans le cas de la référence.

La diminution très nette et durable du taux de ratés avec la céramique conforme à l'invention permet d'augmenter la durée de vie et la fiabilité de la bougie dans des proportions remarquables.

## Revendications

1. Procédé de préparation d'une bougie d'allumage à haute énergie basse tension, comportant une céramique entre ses électrodes, **caractérisé en ce que:**
- on mélange dans un récipient renfermant un liquide, 50 à 75% en masse d'un composé destiné à former une phase conductrice, et 25 à 50% en masse d'un ou plusieurs matériaux permettant la formation de phases de grenat d'yttrium après traitement thermique ;
- on effectue des opérations de broyage, de séchage et de tamisage de ce mélange ;
- on effectue un pressage ou une injection dans un moule de ce mélange ;
- on effectue un frittage de ce mélange de manière à obtenir une céramique de porosité comprise entre 0 et 30% ;
- et on utilise ladite céramique pour constituer le matériau situé entre les électrodes d'une bougie d'allumage à haute énergie basse tension.

2. Procédé selon la revendication 1, **caractérisé en ce que** la phase conductrice est choisie parmi le SiC et le MoSi₂ et leurs mélanges.

3. Procédé selon la revendication 1 ou 2, **caractérisé en ce que** la porosité de la céramique obtenue est comprise entre 0 et 15%.

4. Procédé selon l'une des revendications 1 à 3, **caractérisé en ce qu'**on ajoute audit mélange un dopant thermoémissif à raison de jusqu'à 30% de la masse totale des composés destinés à former les phases conductrice et isolante.

5. Procédé selon l'une des revendications 1 à 4, **caractérisé en ce qu'**on ajoute au mélange 3 à 60% en masse, par rapport à la masse totale des composés destinés à former les phases conductrice et isolante, d'un ou plusieurs composés organiques liants et/ou plastifiants, et **en ce qu'**on effectue après le pressage ou l'injection et avant le frittage une opération de déliantage.

6. Procédé selon la revendication 5, **caractérisé en ce qu'**on effectue le broyage en deux étapes, **en ce que** l'addition du plastifiant a lieu entre les deux étapes, et **en ce que** la deuxième étape de broyage est moins énergique que la première étape.

7. Procédé selon l'une des revendications 1 à 6, **caractérisé en ce que** lesdits matériaux permettant la formation de phases de grenat d'yttrium sont l'alumine et l'Y₂O₃.

8. Procédé selon la revendication 7, **caractérisé en ce que** le grenat d'yttrium est un grenat d'yttrium-aluminium qui renferme un ou plusieurs des composés Y₂O₃, Al₂O₃, YAlO₃, Y₃Al₅O₁₂, Y₄Al₂O₉.

9. Procédé selon l'une des revendications 4 à 8, **caractérisé en ce que** le dopant thermoémissif est le LaB₆.

10. Bougie d'allumage du type à haute énergie basse tension comportant une céramique semi-conductrice entre ses électrodes, **caractérisée en ce qu'**elle a été préparée selon l'une des revendications 1 à 9.

## Claims

1. Process for preparing a high-energy, low voltage spark plug having a ceramic between its electrodes, **characterised in that**
50 to 75% by mass of a compound intended to form a conductive phase and 25 to 50% by mass of one or more materials allowing the formation of phases of yttrium garnet after thermal treatment are mixed in a container holding a liquid;
this mixture is subjected to grinding, drying and screening operations;
this mixture is pressed or injection moulded;
this mixture is sintered so as to obtain a ceramic having a porosity of between 0 and 30%;
and the said ceramic is used to form the material located between the electrodes of a high-energy, low voltage spark plug.

2. Process according to claim 1, **characterised in that** the conductive phase is selected from among SiC and MoSi₂ and mixtures thereof.

3. Process according to claim 1 or 2, **characterised in that** the porosity of the ceramic obtained is between 0 and 15%.

4. Process according to one of claims 1 to 3, **characterised in that** a thermo-emitting dopant is added to the said mixture in an amount of 30% of the total mass of the compounds intended to form the conductive and insulating phases.

5. Process according to one of claims 1 to 4, **characterised in that** 3 to 60% by mass of one or more organic binders and/or plasticisers, based on the total mass of compounds intended to form the conductive and insulating phases, are added to the mixture and **in that** an operation of binder removal is carried out after the pressing or injection and before the sintering.

6. Process according to claim 5, **characterised in that** the grinding is carried out in two steps, **in that** the addition of the plasticiser takes place between the two steps, and **in that** the second grinding step is less energetic than the first step.

7. Process according to one of claims 1 to 6, **characterised in that** the materials that allow the formation of yttrium garnet phases are aluminium oxide and Y₂O_{3.}

8. Process according to claim 7, **characterised in that** the yttrium garnet is an yttrium aluminium garnet which contains one or more of the compounds Y₂O₃, Al₂O₃, YAlO₃, Y₃Al₅O₁₂ and Y₄Al₂O₉.

9. Process according to one of claims 4 to 8, **characterised in that** the thermo-emitting dopant is LaB₆.

10. Spark plug of the high energy low voltage type comprising a semi-conductive ceramic between its electrodes, **characterised in that** it has been prepared according to one of claims 1 to 9.

## Patentansprüche

1. Verfahren zur Herstellung einer Hochenergie-Niederspannungszündkerze, die zwischen ihren Elektroden eine Keramik umfasst, **dadurch gekennzeichnet, dass**:
- man in einem eine Flüssigkeit enthaltenden Behälter 50 bis 75 Masse-% einer Verbindung, die dazu bestimmt ist, eine leitende Phase zu bilden, und 25 bis 50 Masse-% eines oder mehrerer Stoffe mischt, die nach Wärmebehandlung die Bildung von YttriumgranatPhasen gestatten;
- man Arbeitsgänge des Zerkleinerns, Trocknens und Siebens dieser Mischung durchführt;
- man eine Pressung oder eine Einspritzung dieser Mischung in eine Form vornimmt;
- man eine Sinterung dieser Mischung so vornimmt, dass man eine Keramik mit einer Porosität zwischen 0 und 30% erhält;
- und man diese Keramik verwendet, um den Werkstoff zu bilden, der zwischen den Elektroden einer Hochenergie-Niederspannungszündkerze gelegen ist.

2. Verfahren nach Anspruch 1, **dadurch gekennzeichnet, dass** die leitende Phase aus SiC und MoSi₂ und ihren Mischungen ausgewählt ist.

3. Verfahren nach Anspruch 1 oder 2, **dadurch gekennzeichnet, dass** die Porosität der erhaltenen Keramik zwischen 0 und 15% beträgt.

4. Verfahren nach einem der Ansprüche 1 bis 3, **dadurch gekennzeichnet, dass** man der Mischung einen thermoemissiven Dotierungsstoff in einem Anteil von bis zu 30% der Gesamtmasse der Verbindungen, die dazu bestimmt sind, die leitende Phase und die isolierende Phase zu bilden, zusetzt.

5. Verfahren nach einem der Ansprüche 1 bis 4, **dadurch gekennzeichnet, dass** man der Mischung, bezogen auf die Gesamtmasse der Verbindungen, die dazu bestimmt sind, die leitende Phase und die isolierende Phase zu bilden, 3 bis 60 Masse-% einer oder mehrerer bindender und/oder weichmachender organischer Verbindungen zusetzt und dass man nach dem Pressen oder Einspritzen und vor dem Sintern einen Entbindungsarbeitsgang durchführt.

6. Verfahren nach Anspruch 5, **dadurch gekennzeichnet, dass** man die Zerkleinerung in zwei Schritten durchführt, dass der Zusatz des Weichmachers zwischen den beiden Schritten stattfindet und dass der zweite Zerkleinerungsschritt weniger energisch als der erste Schritt ist.

7. Verfahren nach einem der Ansprüche 1 bis 6, **dadurch gekennzeichnet, dass** die Stoffe, die die Bildung von Yttriumgranatphasen gestatten, Aluminiumoxid und Y₂O₃ sind.

8. Verfahren nach Anspruch 7, **dadurch gekennzeichnet, dass** der Yttriumgranat ein Yttrium-Aluminium-Granat ist, der eine oder mehrere der Verbindungen Y₂O₃, Al₂O₃, YAlO₃, Y₃Al₅O₁₂, Y₄Al₂O₉ enthält.

9. Verfahren nach einem der Ansprüche 4 bis 8, **dadurch gekennzeichnet, dass** der thermoemissive Dotierungsstoff LaB₆ ist.

10. Hochenergie-Niederspannungszündkerze, umfassend eine halbleitende Keramik zwischen ihren Elektroden, **dadurch gekennzeichnet, dass** sie nach einem der Ansprüche 1 bis 9 hergestellt wurde.
